# EUROPEAN PATENT APPLICATION

(11) **EP 4 714 793 A1**
(43) Date of publication of application: **25.03.2026**
(21) Application number: 25192098.9
(22) Date of filing: 28.07.2025
(51) Int. Cl.: B62D 21/15, B60K 1/04, B62D 25/02, B62D 25/20

(54) **LOWER STRUCTURE FOR ELECTRIC VEHICLE**

(30) Priority: 18.09.2024 JP 2024161187
(71) Applicant: Suzuki Motor Corporation, Shizuoka 432-8611 (JP)
(72) Inventor: ARAI, Hayato, HAMAMATSU-SHI, 432-8611 (JP); SASAKI, Makoto, HAMAMATSU-SHI, 432-8611 (JP)
(74) Representative: Plasseraud IP

(57) **Abstract**

[Problem to be Solved] To protect a battery pack placed below a floor from an impact load.

[Solution] A lower structure for an electric vehicle includes a battery pack 10 disposed between side members, a hanger member 60 provided in each of the side members and to which a trailing arm is coupled, and a side bracket 70 extending from the hanger member 60 toward each of side sills 40, and rigidity of the side bracket 70 in a vehicle width direction is set lower than rigidity of the hanger member 60 in the vehicle width direction.

## Description

### [Technical Field]

The present invention relates to lower structures of electric vehicles.

### [Background Art]

As disclosed, for example, in Patent Literature 1, an electric vehicle includes a battery pack disposed below a floor panel constituting a floor part of the vehicle. Furthermore, in this example, a driving electric motor is disposed in front of the battery pack in the vehicle.

The battery pack is required to have a higher capacity to extend the cruising distance of the electric vehicle. As a result, the battery pack tends to be larger. As the size of the battery pack increases, the proportion of a space occupied by the battery pack in a space below a floor part increases.

Furthermore, in the electric vehicle, it is necessary to secure a space for placing the battery pack below the floor panel. In the structure of the example, the floor panel is disposed above side members arranged on opposite sides in a vehicle width direction. The battery pack is disposed between the side members on the opposite sides below the floor panel.

The side member of the example is a member that secures vehicle body rigidity and is required to have strength sufficient to withstand an impact load acting on a vehicle body, for example, due to a side collision, a front collision, or the like. To set the dimensions of the battery pack in the vehicle width direction as large as possible, an outer part of the battery pack in the vehicle width direction and an inner part of the side member in the vehicle width direction are placed to be closer together.

### [Citation List]

### [Patent Literature]

[Patent Literature 1] JP 2021-104759 A

### [Summary of Invention]

### [Problems to be Solved by the Invention]

In side parts in a vehicle body lower part, it is necessary to secure a certain strength against an impact load due to a side collision or the like, and the side parts are provided with a structure that absorbs impact caused by the side collision or the like. For example, in the impact absorbing structure, the impact load is absorbed by deforming vehicle body side parts. Therefore, it is necessary to provide a stroke for deformation on the vehicle body side parts.

In addition, in a case of providing the impact absorbing structure on an outer side of a highly rigid side member in the vehicle width direction, in the structure of the example, a space outside the side member in the vehicle width direction is narrow, and it may be difficult to secure a sufficient stroke so that the vehicle body side parts are deformed to absorb the impact. Therefore, in the structure of the example, there has been room for improvement in effectively absorbing the impact load caused by the side collision or the like in a space outside the battery pack in the vehicle width direction, in the side parts in the vehicle body lower part.

The present invention has been made to solve these problems, and an object thereof is to provide a lower structure for an electric vehicle in which a battery pack is placed in a limited space below a vehicle floor part, and which can protect the battery pack from impact loads.

### [Means for Solving the Problems]

A lower structure for an electric vehicle according to the present invention for achieving the object includes side members arranged in a pair outside a vehicle lower part in a vehicle width direction and extending in a vehicle front-rear direction, side sills arranged outside the side members in the vehicle width direction and extending in the vehicle front-rear direction, and a battery pack disposed between the side members. The lower structure for the electric vehicle includes a hanger part that is provided in each of the side members and to which a trailing arm is coupled, and a bracket extending from the hanger part toward each of the side sills, and rigidity of the bracket in the vehicle width direction is set lower than rigidity of the hanger part in the vehicle width direction.

### [Advantageous Effect of Invention]

According to the present invention, a battery pack can be placed in a limited space below a vehicle floor part, to protect the battery pack from impact loads.

### [Brief Description of Drawings]

[Figure 1] Figure 1 is a perspective view of a lower structure for an electric vehicle according to the present invention viewed from above a floor part of the electric vehicle.
[Figure 2] Figure 2 is a perspective view of a left part in which a side body outer panel is attached to the electric vehicle of Figure 1 viewed from below in the vehicle.
[Figure 3] Figure 3 is a bottom view of the lower structure for the electric vehicle of Figure 1 viewed from below in the vehicle.
[Figure 4] Figure 4 is an enlarged perspective view of a hanger member, a side bracket and the like of Figure 2 viewed from below in the vehicle.
[Figure 5] Figure 5 is an enlarged bottom view showing that the battery pack of Figure 3 is removed.
[Figure 6] Figure 6 is an enlarged perspective view showing an enlarged part X of Figure 3.
[Figure 7] Figure 7 is a perspective view of a cross section taken along a line A-A in Figure 3 viewed from the rear of the vehicle.
[Figure 8] Figure 8 is an end view taken along a line B-B in Figure 5, additionally showing the battery pack and a battery suspension bracket.
[Figure 9] Figure 9 is a sectional view taken a line B-B in Figure 5, additionally showing the battery suspension bracket.

### [Mode for Carrying Out the Invention]

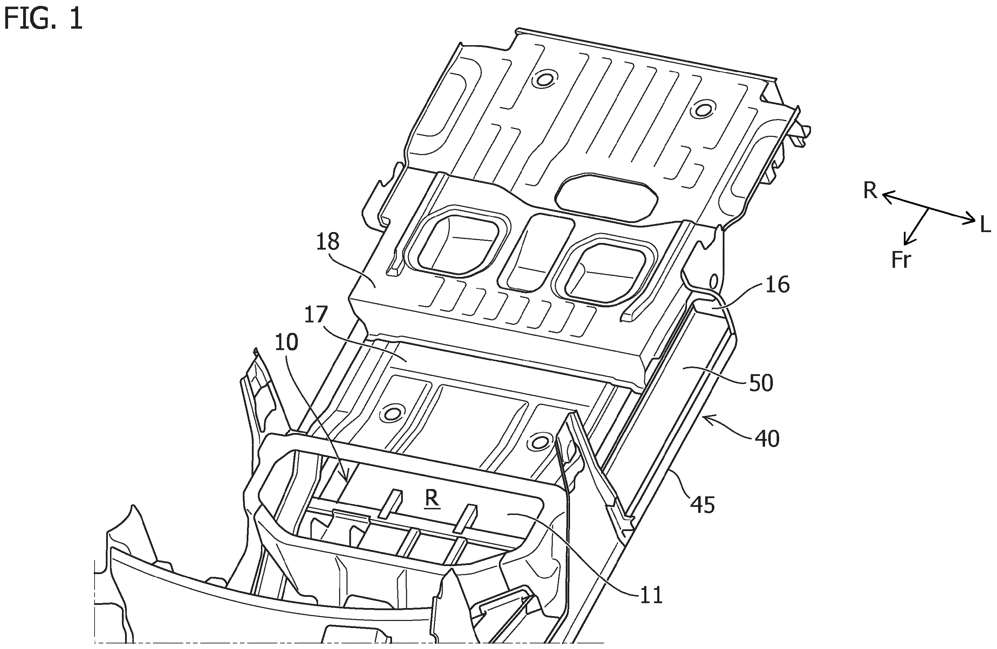

Hereinafter, an embodiment of a lower structure for an electric vehicle according to the present invention will be described with reference to the drawings (Figures 1 to 9). It is to be noted that in the drawings, an arrow Fr direction indicates forward in a vehicle front-rear direction. In the description of the embodiment, "front part (front end) and rear part (rear end)" correspond to a front part and a rear part in the vehicle front-rear direction. Arrows R and L indicate a right side and a left side when an occupant looks forward of the vehicle. Furthermore, arrow U indicates upward in a vehicle up-down direction.

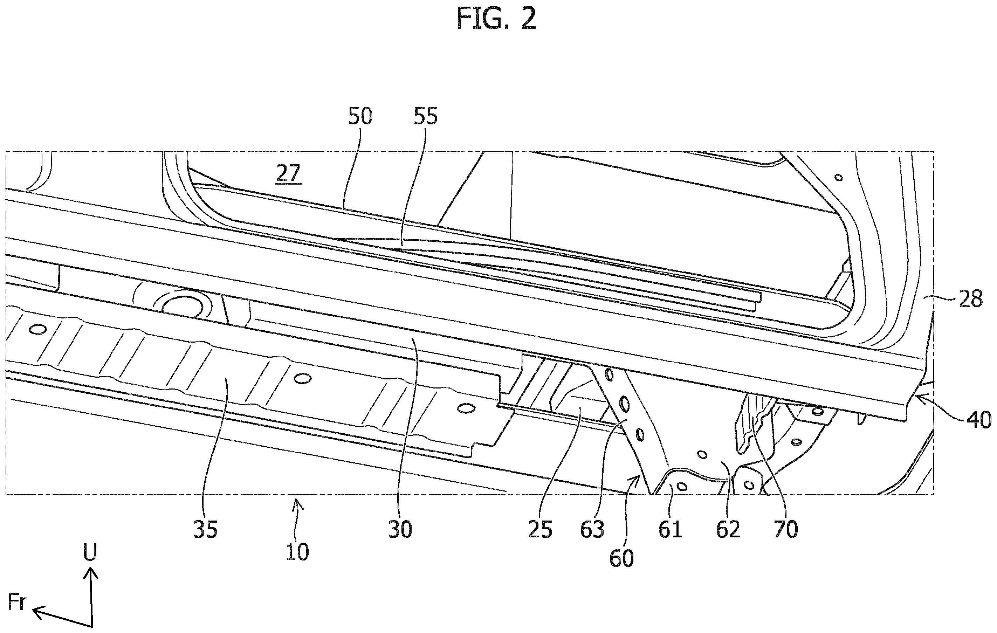

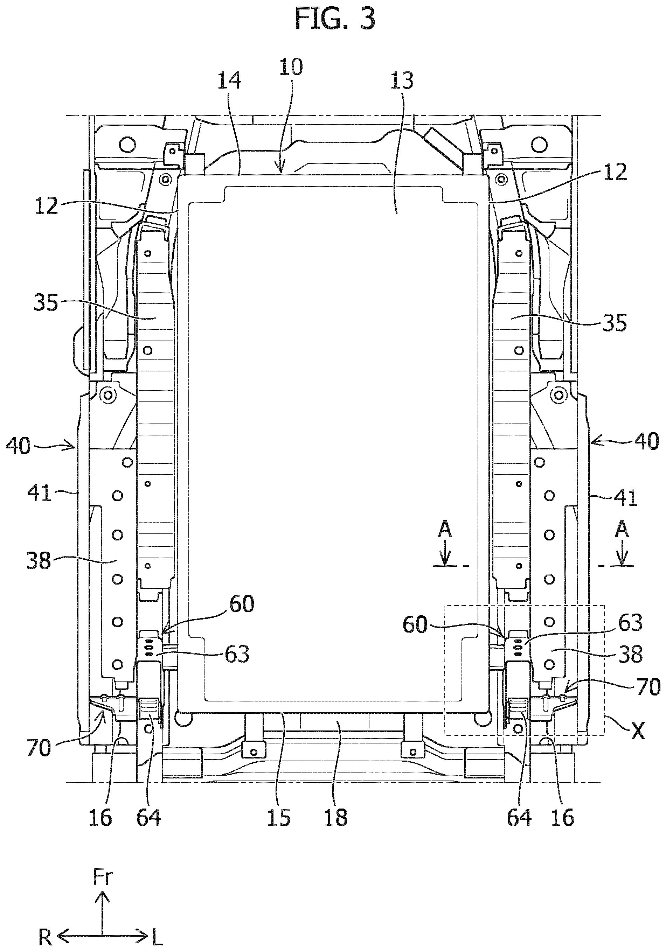

As shown in Figures 2 to 4, the lower structure for the electric vehicle of the present embodiment includes a battery pack 10 disposed below a floor part. As shown in Figure 3, the lower structure further includes side members 20, side sills 40, hanger members 60 (hanger parts), and side brackets 70 (brackets).

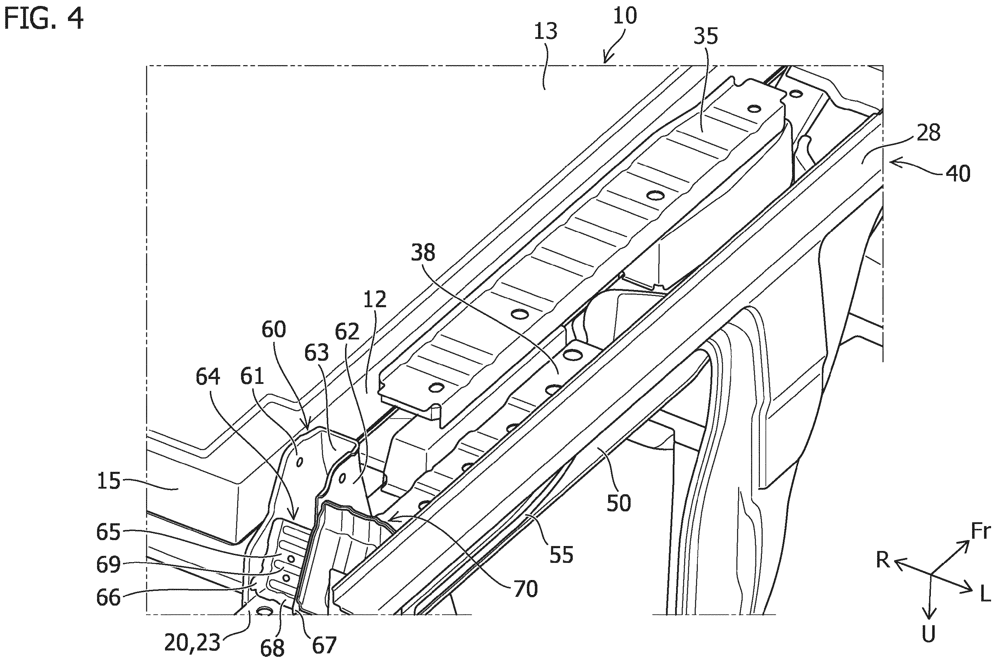

As shown in Figures 1 and 3, the battery pack 10 is a so-called heavy object disposed below a floor panel 17 constituting the floor part of the vehicle. Although the detailed structure of the battery pack 10 will not be described, the battery pack 10 has an outer shape that is substantially a rectangular parallelepiped, and includes an upper surface part 11, left and right side wall parts 12, a lower surface part 13, a front wall part 14, and a rear wall part 15 (Figures 3 and 4). The battery pack 10 is suspended on members constituting a vehicle body such as the side members 20, for example, via battery mount members 30, and battery suspension brackets 35. A configuration to which the battery pack 10 is attached will be described later.

Each of the side members 20 is a highly rigid member constituting a vehicle body skeleton and formed of a metal material. As shown in Figure 3, the side members 20 are arranged in a pair on opposite outer sides of a lower part of the vehicle in a vehicle width direction and extend in the vehicle front-rear direction. In this example, the side members 20 are arranged along the side wall parts 12 at intervals outside each of the left and right side wall parts 12 of the battery pack 10 in the vehicle width direction. In the vehicle front-rear direction, a front part of each side member 20 is placed forward from the front wall part 14 of the battery pack 10 in the vehicle, and a rear part of the side member 20 is placed behind the rear wall part 15 of the battery pack 10 in the vehicle.

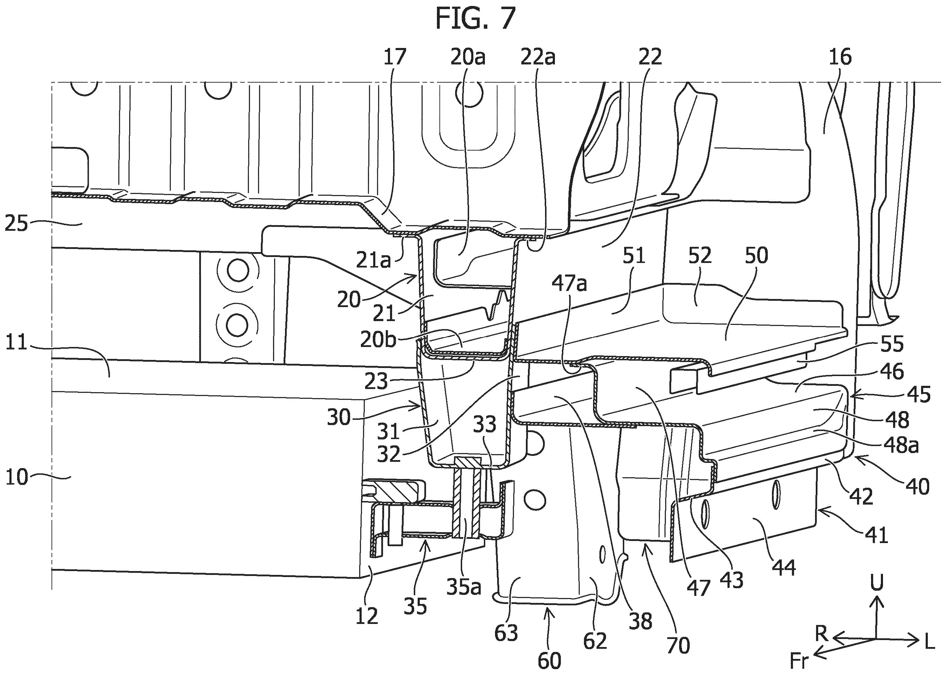

As shown in Figures 7 to 9, the side member 20 has a U-shaped cross section that is open upward in the vehicle. That is, the side member 20 includes an inner wall part 21, an outer wall part 22, and a bottom surface part 23, and the bottom surface part 23 has a substantially rectangular horizontal surface extending in the vehicle front-rear direction. The inner wall part 21 protrudes upward from an inner end of the bottom surface part 23 in the vehicle width direction and extends in the vehicle front-rear direction. At an upper end of the inner wall part 21, an inner flange portion 21a protruding inward in the vehicle width direction is provided. The outer wall part 22 protrudes upward from an outer end of the bottom surface part 23 in the vehicle width direction and extends in the vehicle front-rear direction. At an upper end of the outer wall part 22, an outer flange portion 22a protruding outward in the vehicle width direction is provided. The inner flange portion 21a and the outer flange portion 22a are joined, for example, to the lower surface of the floor panel 17 by spotwelding. To an inner part of the side member 20, two reinforcement plates 20a and 20b are joined.

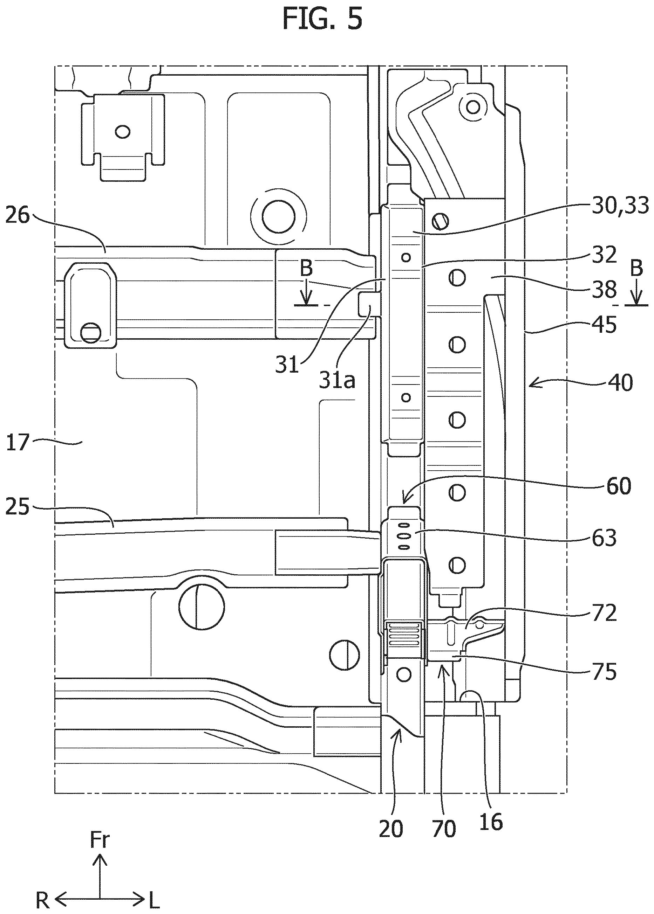

Furthermore, in the present embodiment, multiple crossmembers 25 and 26 extending in the vehicle width direction are provided to connect the side members 20 on opposite sides in the vehicle width direction. The crossmembers 25 and 26 are highly rigid members constituting the vehicle body skeleton and formed of a metal material in the same manner as the side members 20. As shown in Figure 5, the lower structure of the present embodiment includes a rear crossmember 25 and a center crossmember 26. Although detailed description will be omitted, an outer part of the rear crossmember 25 in the vehicle width direction is joined to a hanger member 60, described later, and the center crossmember 26 is disposed at an interval forward from the rear crossmember 25 in the vehicle. Note that the crossmembers 25 and 26 are not limited to the rear crossmember 25 and the center crossmember 26.

Here, a configuration in which the battery pack 10 is suspended on the vehicle body will be described. The battery pack 10 is suspended on the vehicle body such as the side members 20 via the battery mount members 30 and the battery suspension brackets 35. As shown in Figures 4 and 5, each of the battery mount members 30 is a member extending in the vehicle front-rear direction and joined to a lower part of the side member 20. As shown in Figures 4, 8 and 9, the battery mount member 30 includes an inner wall part 31, an outer wall part 32, and a bottom surface part 33, and has a U-shaped cross section similarly to the side member 20. An upper portion of the inner wall part 31 of the battery mount member 30 is joined to the inner wall part 21 of the side member 20 by spotwelding. Similarly, an upper portion of the outer wall part 32 of the battery mount member 30 is joined to the outer wall part 22 of the side member 20 by spotwelding.

As shown in Figure 5, a flange 31a joined to the center crossmember 26 is provided in an intermediate portion of the inner wall part 31 of the battery mount member 30 in the vehicle front-rear direction. The flange 31a is joined to the lower surface of the center crossmember 26 by spotwelding.

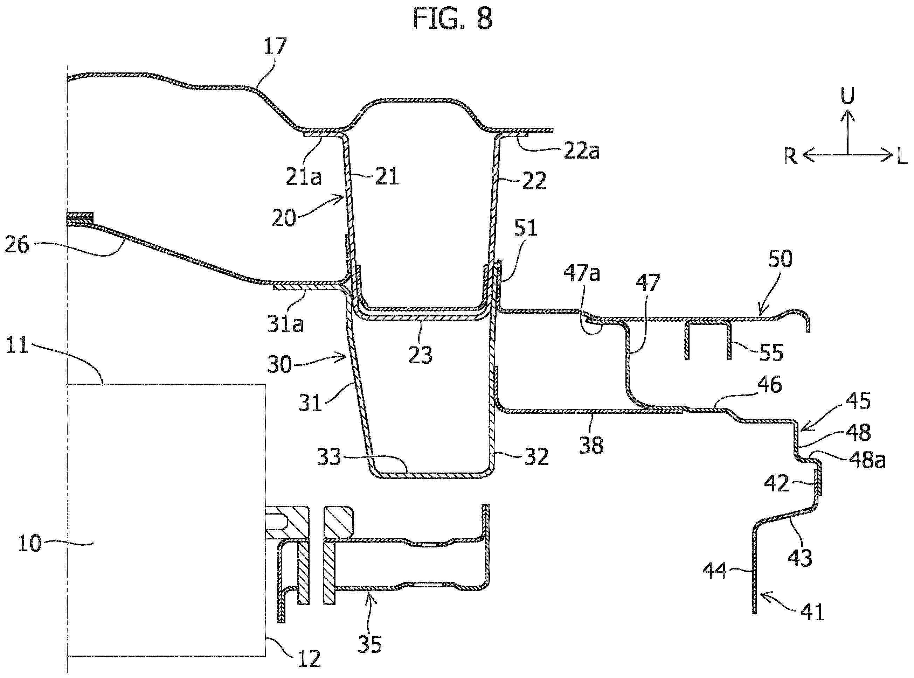

The battery suspension bracket 35 is suspended on the bottom surface part 33 of the battery mount member 30 via a coupling member 35a and disposed below the bottom surface part 33 of the battery mount member 30. As shown in Figures 2 to 4, the battery suspension bracket 35 has a predetermined length in the width direction and extends in the vehicle front-rear direction. As shown in Figures 7 and 8, an inner end of the battery suspension bracket 35 in the vehicle width direction is connected to a side part of the battery pack 10.

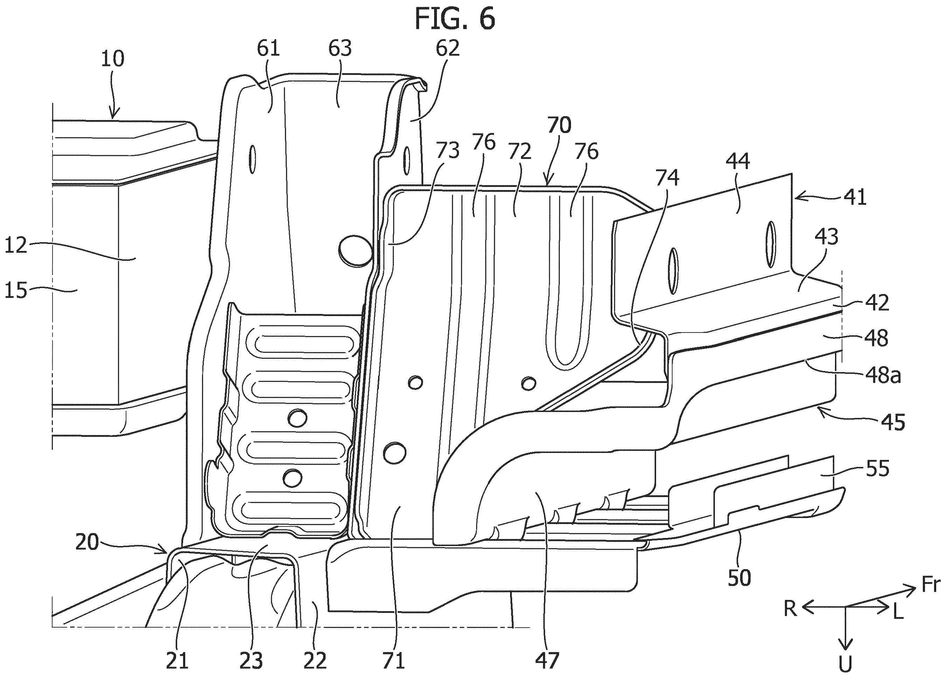

Next, the side sill 40 of the present embodiment will be described. The side sill 40 is disposed in a lower part of a door opening 27 provided in a vehicle side part and extends in the vehicle front-rear direction to constitute a vehicle body skeleton in the same manner as the side member 20. Furthermore, a front part of the side sill 40 bulges inward in the vehicle and may be joined to an inner part of the side member 20 in the vehicle width direction. As shown in Figures 6 to 9, the side sill 40 includes a lower inner panel 41, an upper inner panel 45, and an upper outer panel 50. The side sill 40 further includes an outer part placed in an outermost part in the vehicle. In the present embodiment, as shown in Figures 2 and 4, the outer part of the side sill 40 includes a part of a side body outer panel 28 constituting the outermost part of the vehicle. The outer part of the side sill 40 may be placed to cover the lower inner panel 41 and the upper inner panel 45 from outside in the vehicle width direction.

As shown in Figures 1 and 7, the upper outer panel 50 extends horizontally in the vehicle front-rear direction, and the upper surface of the upper outer panel 50 functions as a footrest for passengers getting in and out through the door opening 27. In the present embodiment, the battery pack 10 is mounted below the floor part, and the floor part is set slightly higher, so that the upper outer panel 50 is effective as the footrest. Although not shown, a bead may be provided on the upper surface of the upper outer panel 50, for example, to prevent slipping. In this case, the bead may be formed to extend in the vehicle width direction or formed to extend to be slightly inclined in the vehicle width direction. A door rail 55 on which a sliding door (not shown) runs is joined to the lower surface of the upper outer panel 50.

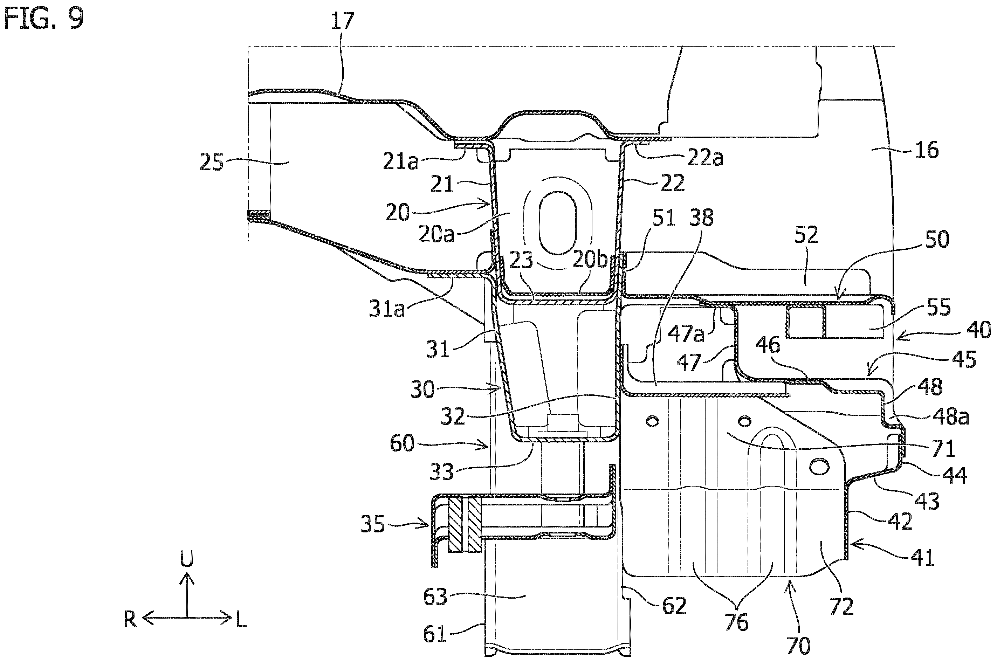

On an inner side of the upper surface of the upper outer panel 50 in the vehicle width direction, an upper flange part 51 protruding upward is provided. The upper flange part 51 is joined to the outer wall part 22 of the side member 20 by spotwelding. Furthermore, at a rear end of the upper surface of the upper outer panel 50, a rear flange part 52 protruding upward is provided. As shown in Figures 7 and 9, for example, the rear flange part 52 is joined to a side panel 16 disposed on an outer side of an upper floor panel 18, for example, by spotwelding. In this example, a cushion part of a rear seat (not shown) is placed on the upper floor panel 18.

As shown in Figures 6 to 9, the upper inner panel 45 is a panel that covers the door rail 55 from inside in the vehicle width direction and from below in the vehicle. The upper inner panel 45 includes a bottom surface part 46, an inner wall part 47, an upper flange portion 47a, and an outer wall part 48. The bottom surface part 46 is placed at an interval downward from the lower surface of the upper outer panel 50. The bottom surface part 46 extends substantially horizontally in the vehicle front-rear direction. The bottom surface part 46 is placed at an interval below the door rail 55, to cover the door rail 55 from below.

The inner wall part 47 extends upward from an inner side of the bottom surface part 46 in the vehicle width direction to the lower surface of the upper outer panel 50. The inner wall part 47 is placed at an interval from an inner side of the door rail 55 in the vehicle width direction and is placed to cover the door rail 55 from inside along a vehicle width. The upper flange portion 47a is a portion protruding outward from an upper end of the inner wall part 47 in the vehicle width direction and is joined to the lower surface of the upper outer panel 50 by spotwelding. For example, a lower arm provided in a lower part of the sliding door is disposed in a space formed by the upper outer panel 50, the inner wall part 47 of the upper inner panel 45, and the bottom surface part 46 and runs on the door rail 55.

The outer wall part 48 of the upper inner panel 45 is a wall part extending downward from an outer end of the bottom surface part 46 in the vehicle width direction. As shown in Figure 7, a step portion 48a is provided in an intermediate portion of the outer wall part 48 in the vehicle up-down direction. A lower edge of the step portion 48a is placed on an outer side in the vehicle width direction compared to an upper edge of the step portion 48a. By providing the step portion 48a, it is possible to improve rigidity in the vehicle front-rear direction. The outer wall part 48 located below the step portion 48a is joined to the lower inner panel 41, for example, by spotwelding.

Next, the lower inner panel 41 will be described. As shown in Figures 6 to 9, the lower inner panel 41 is a panel disposed below the upper inner panel 45. The lower inner panel 41 includes an outer wall part 42, an inclined surface part 43, and an inner wall part 44. The outer wall part 42 is a side wall facing outward in the vehicle width direction and extends in the vehicle front-rear direction. An upper portion of the outer wall part 42 of the lower inner panel 41 is joined to an inner lower portion of the outer wall part 48 of the upper inner panel 45 by spotwelding.

As shown in Figures 6 to 9, the inclined surface part 43 of the lower inner panel 41 is a part inclined downward in the vehicle while extending inward in the vehicle width direction from a lower end of the outer wall part 42. Furthermore, the inner wall part 44 is a side wall extending downward in the vehicle from an inner end of an inclined wall part in the vehicle width direction. In the vehicle width direction, the inner wall part 44 of the lower inner panel 41 is placed below the door rail 55.

Next, the hanger member 60 will be described. The hanger member 60 is provided on the side member 20, and a trailing arm is coupled to the hanger member 60. In this example, as shown in Figures 6 and 7, the hanger member 60 is a member extending downward in the vehicle from the lower surface of the side member 20 and is a highly rigid member formed of a metal material. A load is input to the hanger member 60 via the trailing arm. Therefore, the hanger member 60 has rigidity sufficient to withstand the load. Furthermore, the battery pack 10 is disposed on an inner side than the hanger member 60 in the vehicle width direction. Hereinafter, the configuration of the hanger member 60 will be described.

The hanger member 60 includes an inner wall portion 61, an outer wall portion 62, a front wall portion 63, and a sandwiching member 64 (sandwiching part). The inner wall portion 61 is a part having a wall surface facing inward in the vehicle width direction and extends downward in the vehicle from a lower portion of the inner wall part 21 of the side member 20. An upper portion of the inner wall portion 61 of the hanger member 60 is joined to the inner wall part 21 of the side member 20 by spotwelding. The inner wall portion 61 of the hanger member 60 and the side wall part 12 of the battery pack 10 are arranged at an interval from each other in the vehicle width direction.

The outer wall portion 62 is a part having a wall surface facing outward in the vehicle width direction and extends downward in the vehicle from a lower portion of the outer wall part 22 of the side member 20. An upper portion of the outer wall portion 62 of the hanger member 60 is joined to the outer wall part 22 of the side member 20 by spotwelding. The side sill 40 and a side bracket 70, described later, are arranged on an outer side of the outer wall portion 62 in the vehicle width direction. Furthermore, as shown in Figures 3, 8 and 9, a reinforcement 38 is joined to the outer wall portion 62. The reinforcement 38 extends in the vehicle front-rear direction, has an L-shaped cross section, and is joined to the outer wall portion 62 of the hanger member 60 and the lower surface of the bottom surface part 46 of the upper inner panel 45.

As shown in Figures 5 and 6, the front wall portion 63 is a wall part connecting a front end of the outer wall portion 62 and a front end of the inner wall portion 61 and is inclined rearward in the vehicle while extending downward in the vehicle. That is, a U-shaped closed cross section is formed by the front wall portion 63, the inner wall portion 61, and the outer wall portion 62. A front portion of the trailing arm is placed inside the U-shaped closed cross section and is rotatably coupled, for example, to the lower portion of the inner wall portion 61 and a lower portion of the outer wall portion 62.

As shown in Figure 6, the sandwiching member 64 is a part that is held by the inner wall portion 61 and the outer wall portion 62 and extends in the vehicle width direction and is a substantially rectangular plate-shaped member in the present embodiment. In the present embodiment, the hanger member 60 includes a hanger body composed of the front wall portion 63, the outer wall portion 62, the inner wall portion 61 and the like described above, and the sandwiching member 64 separate from the hanger body. The sandwiching member 64 includes a rectangular main surface part 65, an inner flange portion 66, an outer flange portion 67, and an upper flange portion 68. The main surface part 65 is inclined forward in the vehicle while extending downward in the vehicle. Furthermore, the main surface part 65 is provided with a plurality of width direction beads 69 extending in the vehicle width direction. The plurality of width direction beads 69 are spaced apart in a longitudinal direction of the main surface part 65.

The upper flange portion 68 is a portion protruding from an upper end of the main surface part 65 to the rear of the vehicle and may be joined to the lower surface of the bottom surface part 23 of the side member 20 by spotwelding. A lower end of the main surface part 65 is placed in intermediate portions of the inner wall portion 61 and the outer wall portion 62 of the hanger member 60 in the vehicle up-down direction. In this example, the lower end is placed substantially in the center of the inner wall portion 61 and the outer wall portion 62 in the vehicle up-down direction.

The inner flange portion 66 of the sandwiching member 64 protrudes from an inner end of the main surface part 65 in the vehicle width direction to the rear of the vehicle and extends along an inclination direction of the main surface part 65. The inner flange portion 66 is joined to the inner surface of the inner wall portion 61 of the hanger member 60 by spotwelding. Here, the inner surface is a wall surface facing a space between the inner wall portion 61 and the outer wall portion 62 in the hanger member 60.

The outer flange portion 67 of the sandwiching member 64 protrudes from an outer end of the main surface part 65 in the vehicle width direction to the rear of the vehicle and extends along the inclination direction of the main surface part 65. The outer flange portion 67 is joined to the inner surface of the outer wall portion 62 of the hanger member 60 by spotwelding. The outer flange portion 67 of the sandwiching member 64 is joined to the outer wall portion 62 at a location corresponding to an inner flange portion 73, described later, in the side bracket 70. A location relationship between the side bracket 70 and the sandwiching member 64 will be described later.

Next, the side bracket 70 will be described. As shown in Figures 3 to 6, the side bracket 70 is a panel formed of a metal material and extends from the hanger member 60 toward the side sill 40. The side bracket 70 is disposed to correspond to a rear part of the battery pack 10 in the vehicle front-rear direction. In this example, as shown in Figures 3 and 4, the side bracket 70 is disposed outside the rear wall part 15 of the battery pack 10 in the vehicle width direction.

In the present embodiment, the rigidity of the side bracket 70 in the vehicle width direction is set lower than the rigidity of the hanger member 60 in the vehicle width direction. The side bracket 70, which is a single panel formed of a metal material, has lower rigidity than the hanger member 60. For example, the plate thickness of the side bracket 70 may be thinner than the plate thickness of the inner wall portion 61, the outer wall portion 62, and the front wall portion 63 of the hanger member 60.

As described above, the battery pack 10 is disposed on the inner side than the hanger member 60 in the vehicle. For example, when subjected to an impact load of a side collision or the like, it is necessary to reduce the intrusion of a collision object into the battery pack 10. In the present embodiment, the highly rigid hanger member 60 and side member 20 are arranged outside the battery pack 10 in the vehicle width direction. Therefore, a highly rigid member can receive the impact load.

For example, an impact load caused by a side collision or the like is first input to the side sill 40. If the side sill 40 is deformed, for example, inward in the width direction by the impact load input to the side sill 40, the load is input to the side bracket 70. Some of impact energy due to the impact load is converted into deformation energy by the deformation of the side sill 40.

When an impact load is input to the side bracket 70, the side bracket 70 is deformed to collapse in the vehicle width direction. The impact energy input to the side bracket 70 is converted into deformation energy by the side bracket 70 that is deformed to collapse. As a result, some of impact load is absorbed by the side bracket 70.

As the side sill 40 and the side bracket 70 absorb the impact load, the impact energy of the impact load input to the hanger member 60 is reduced. Here, the hanger member 60 is more rigid than the side bracket 70 and can therefore receive an impact load with reduced impact energy.

As shown in Figure 6, the hanger member 60 is joined to the side member 20, so that the side member 20 and the hanger member 60 can receive the impact load. Since the side member 20 extends in the vehicle front-rear direction, the load input to the hanger member 60 is transmitted to the side member 20 and can be effectively transmitted to the front and rear parts of the vehicle, and the load can be effectively distributed. Therefore, according to the configuration of the present embodiment, it is possible to reduce the impact load transmitted to the rear part of the battery pack 10, and the battery pack 10 can be protected from the impact load.

Furthermore, according to the present embodiment, by providing the side bracket 70, the impact load can be effectively absorbed between the side sill 40 and the side member 20, so that the side member 20 can be disposed outside in the vehicle width direction, and as a result, a larger battery pack 10 can be disposed in a limited space below the floor part.

Here, details of the side bracket 70 will be described. As shown in Figures 7 and 9, the side bracket 70 of the present embodiment includes a main surface part 71 and an extending part 72 and further includes a flange that is formed on an outer periphery of the main surface part 71 and the extending part 72 and that functions as a reinforcement rib. The flange includes an inner flange portion 73, an outer flange portion 74, and an upper flange portion 75.

The main surface part 71 is a part extending in the vehicle width direction and is placed between the outer wall portion 62 of the hanger member 60 and the inner wall part 47 of the upper inner panel 45 of the side sill 40. The main surface part 71 is inclined rearward in the vehicle while extending downward in the vehicle. An inclination direction of the main surface part 71 corresponds to an inclination direction of the sandwiching member 64 of the hanger member 60.

The extending part 72 is a part extending downward in the vehicle from a lower portion of the main surface part 71 and extending outward in the vehicle width direction. A lower end of the extending part 72 is placed below a lower end of the side sill 40 (lower end of the inner wall part 44 of the lower inner panel 41). The extending part 72 is placed between the outer wall portion 62 of the hanger member 60 and the inner wall part 44 of the lower inner panel 41 of the side sill 40 and extends in the vehicle width direction. That is, the length of the extending part 72 in the vehicle width direction is set longer than the length of the main surface part 71 in the vehicle width direction.

Furthermore, an inclination angle of the main surface part 71 to a vertical direction (an angle formed below by the main surface part 71 to the vertical direction) is set greater than an inclination angle of the extending part 72. Note that the extending part 72 may extend along the vertical direction without inclining.

As shown in Figure 6, the inner flange portion 73 of the side bracket 70 is a portion protruding from inner ends of the main surface part 71 and the extending part 72 in the vehicle width direction to the rear of the vehicle and extending along an inclination direction of the main surface part 71 and extending part 72. The inner flange portion 73 is joined to the outer wall portion 62 of the hanger member 60 by spotwelding. Furthermore, in the present embodiment, three of the inner flange portions 73 located in the main surface part 71, the outer wall portion 62 of the hanger member 60 and the outer flange portion 67 of the sandwiching member 64 are stacked and joined together.

The outer flange portion 74 of the side bracket 70 is a portion protruding from outer ends of the main surface part 71 and extending part 72 in the vehicle width direction to the rear of the vehicle and extending along the inclination direction of the main surface part 71 and extending part 72. The outer flange portion 74 located at an upper portion of the main surface part 71 is joined to the outer wall portion 62 of the hanger member 60 by spotwelding, and the outer flange portion 74 located in the extending part 72 is joined to the inner wall part 44 of the lower inner panel 41 by spotwelding. The outer flange portion 74 located at the lower portion of the main surface part 71 is inclined outward in the vehicle width direction while extending downward in the vehicle and is disposed at an interval inward in the vehicle width direction from the outer wall part 48 of the upper inner panel 45.

The upper flange portion 75 protrudes from an upper end of the main surface part 71 to the front of the vehicle and extends along the vehicle width direction. The upper flange portion 75 is joined to the lower surface of the upper outer panel 50 by spotwelding.

In the present embodiment, the outer flange portion 74 of the side bracket 70 is joined to an inner side of the side sill 40, and the side bracket 70 includes the extending part 72, so that a range in which the impact energy due to the impact load in the vehicle width direction can be absorbed is expanded downward in the vehicle. Therefore, the side bracket 70 can further increase the amount of impact energy to be absorbed.

Furthermore, since the side bracket 70 is joined to the lower surface of the upper outer panel 50 of the side sill 40 as shown in Figures 6 and 9, it is also possible to transmit a load from the extending part 72 toward the floor part of the vehicle. Since the side bracket 70 is joined to the hanger member 60, rigidity can be set high in the vehicle up-down direction. Therefore, the side bracket 70 also functions stably as an abutment part for jacking up.

In addition, the side bracket 70 of the present embodiment is inclined as described above, and the inclination direction of the main surface part 71 inclines along the inclination direction of the sandwiching member 64 of the hanger member 60. Furthermore, since the sandwiching member 64 and the side bracket 70 are arranged side by side in the vehicle width direction via the outer wall portion 62 of the hanger member 60, it is possible to effectively receive the impact load transmitted from the side bracket 70.

As described above, the side bracket 70 collapses to absorb some of impact energy in the side bracket 70. Here, the impact energy that could not be fully absorbed by the side bracket 70 can be received by the hanger member 60 including the sandwiching member 64 having high rigidity. Furthermore, since the sandwiching member 64 extends along the inclination direction described above, it is also possible to transmit the load received by the sandwiching member 64 upward.

In the present embodiment, as shown in Figures 6 and 9, a reinforcement part extending from an upper part to a lower part of the side bracket 70 is provided in an intermediate part of the side bracket 70 in the vehicle width direction. The reinforcement part of this example includes two vertical beads 76 extending from the main surface part 71 to the lower end of the extending part 72 along the inclination direction of the main surface part 71 and extending part 72. Furthermore, in the present embodiment, the rigidity of the sandwiching member 64 in the vehicle width direction is set higher than the rigidity of the side bracket 70 in the vehicle width direction.

By providing the vertical beads 76, the rigidity of the side bracket 70 in the vehicle up-down direction increases. Therefore, the side bracket can be effectively used in jacking up as described above. Furthermore, at an outer end of each of the vertical beads 76 in the vehicle width direction, a curved or bent portion (ridgeline) is formed on the upper surface of the main surface part 71, and a portion in which the rigidity in the vehicle width direction lowers is formed. As a result, a portion that is easily collapsed under the load in the vehicle width direction is formed, so that the impact absorption effect is improved.

Furthermore, in the present embodiment, a reinforcement rib is provided on the outer periphery of the side bracket 70, and as a part of the reinforcement rib, the outer flange portion 74, the inner flange portion 73 and the upper flange portion 75 are provided, so that the side bracket 70 can secure a predetermined rigidity. Furthermore, the load is easily transmitted to the outer flange portion 74 and the like, and the side bracket 70 can easily absorb the impact load.

The description of the present embodiment is an example for illustrating the present invention and does not limit the invention as claimed in the claims. Furthermore, the configuration of each part of the present invention is not limited to the embodiment, and various modifications can be made within the technical range claimed in the claims.

For example, in the present embodiment, an outer part of the side bracket 70 in the vehicle width direction is joined to the side sill 40, and the present invention is not limited to this example. For example, the outer flange portion 74 of the side bracket 70 may be disposed at an interval from the side sill 40 in the vehicle width direction. In this case, the side sill 40 is subjected to the impact load of the side collision or the like and is deformed inward in the vehicle, and then the deformed side sill 40 presses against the side bracket 70, so that the side bracket 70 is deformed, to absorb the impact load.

In the present embodiment, the upper outer panel 50 constituting the side sill 40 functions as the footrest for passengers getting in and out through the door opening 27 as described above. Therefore, for example, the structure of the side sill 40 of the present embodiment is effective for a vehicle with a high floor part. For example, for a vehicle with a so-called cabover structure in which front seats (driver and passenger seats) are arranged above an electric motor, the structure of the side sill 40 of the present embodiment is effective as a countermeasure against a side collision. Furthermore, the structure of the side sill 40 of the present embodiment is effective as the countermeasure against the side collision even for a specification that the electric motor is disposed below the front seat, for example, even in a vehicle in which a space region R (Figure 1) is provided below the front seat and above a front part of the battery pack 10 so that any device may be disposed.

### [Reference Signs List]

- 10: Battery pack
- 11: Upper surface part
- 12: Side wall part
- 13: Lower surface part
- 14: Front wall part
- 15: Rear wall part
- 16: Side panel
- 17: Floor panel
- 18: Upper floor panel
- 20: Side member
- 20a: Reinforcement plate
- 20b: Reinforcement plate
- 21: Inner wall part
- 21a: Inner flange portion
- 22: Outer wall part
- 22a: Outer flange portion
- 23: Bottom surface part
- 25: Rear crossmember
- 26: Center crossmember
- 27: Door opening
- 28: Side body outer panel
- 30: Battery mount member
- 31: Inner wall part
- 31a: Flange
- 32: Outer wall part
- 33: Bottom surface part
- 35: Battery suspension bracket
- 38: Reinforcement
- 40: Side sill
- 41: Lower inner panel
- 42: Outer wall part
- 43: Inclined surface part
- 44: Inner wall part
- 45: Upper inner panel
- 46: Bottom surface part
- 47: Inner wall part
- 47a: Upper flange portion
- 48: Outer wall part
- 48a: Step portion
- 50: Upper outer panel
- 51: Upper flange part
- 52: Rear flange part
- 55: Door rail
- 60: Hanger member (hanger part)
- 61: Inner wall portion
- 62: Outer wall portion
- 63: Front wall portion
- 64: Sandwiching member (sandwiching part)
- 65: Main surface part
- 66: Inner flange portion
- 67: Outer flange portion
- 68: Upper flange portion
- 69: Width direction bead
- 70: Side bracket (bracket)
- 71: Main surface part
- 72: Extending part
- 73: Inner flange portion
- 74: Outer flange portion
- 75: Upper flange portion
- 76: Vertical bead (reinforcement part)
- R: Space region

## Claims

1. A lower structure for an electric vehicle, comprising:
side members arranged in a pair outside a vehicle lower part in a vehicle width direction and extending in a vehicle front-rear direction, side sills arranged outside the side members in the vehicle width direction and extending in the vehicle front-rear direction, and a battery pack disposed between the side members, the lower structure **characterized in that**
the lower structure includes:
a hanger part provided in each of the side members and to which a trailing arm is coupled; and
a bracket extending from the hanger part toward each of the side sills, and
rigidity of the bracket in the vehicle width direction is lower than rigidity of the hanger part in the vehicle width direction.

2. The lower structure for the electric vehicle according to claim 1, wherein the bracket extends in the vehicle width direction, and an outer part of the bracket in the vehicle width direction is joined to the side sill.

3. The lower structure for the electric vehicle according to claim 1 or 2, wherein the hanger part includes an inner wall portion facing inward in the vehicle width direction, an outer wall portion facing outward in the vehicle width direction, and a sandwiching part held by the inner wall portion and the outer wall portion and extending in the vehicle width direction.

4. The lower structure for the electric vehicle according to claim 3, wherein
the bracket is inclined forward in the vehicle and rearward in the vehicle while extending downward in the vehicle, and
the sandwiching part is inclined along an inclination direction of the bracket.

5. The lower structure for the electric vehicle according to claim 3, wherein
a reinforcement part extending from an upper part to a lower part of the bracket is provided in an intermediate part of the bracket in the vehicle width direction, and
rigidity of the sandwiching part in the vehicle width direction is set higher than rigidity of the bracket in the vehicle width direction.

6. The lower structure for the electric vehicle according to claim 1 or 2, wherein a flange protruding forward or rearward in the vehicle is provided in an inner part of the bracket in the vehicle width direction, and the flange is joined to the outer wall portion of the hanger part.

7. The lower structure for the electric vehicle according to claim 1 or 2, wherein an extending part extending toward below the side sill in a vehicle up-down direction is provided in the bracket in the vehicle up-down direction.
